# EUROPEAN PATENT APPLICATION

(11) **EP 0 965 489 A1**
(43) Date of publication of application: **22.12.1999**
(21) Application number: 99111063.6
(22) Date of filing: 16.06.1999
(51) Int. Cl.: B60R 13/00

(54) **Badge-plate and counterplate unit to apply emblems and the like on the front wall of the housing for air bag devices, in cars and other motorvehicles**

(30) Priority: 18.06.1998 IT MI981392
(71) Applicant: Bomisa Bottoni Minuterie S.p.A., 20094 Assago (Milano) (IT)
(72) Inventor: Manfrin, Marino, 20082 Binasco (Milano) (IT)
(74) Representative: Vatti, Paolo, Dr. Ing.

(57) **Abstract**

Badge-plate (1) and counterplate unit to safely apply emblems and the like on the front wall of the housing for air bag devices, in cars and other motorvehicles, and particularly onto the portion of said wall opening up, at the centre of the steering wheel, when the air bag device starts to operate, said unit consisting of a badge-plate (1), formed by coining from a metal sheet in one piece with a central projecting extruded pin (2) having a conical cavity (5) at its end, and of a counterplate comprising a central hole in correspondence of said pin (2), the counterplate being steadily associated to the badge-plate - after having interposed between them the wall housing the air bag device - by riveting with a caulking the end of said pin (2) of the badge-plate (1) onto the edge of said hole of the counterplate. The badge-plate forming part of said unit consists of a blank metallic base body (1) onto which is steadily applied a covering shell (3) bearing the emblem.

## Description

It is a known custom to apply at the centre of the steering wheel of cars and other motorvehicles an emblem, or like (usually the badge of the car factory or a logo relating to the type of motorvehicle), reproduced onto a badge-plate.

In the past, said application has never created any kinds of problems and has been accomplished in the most different ways, always using besides very plain and simple means.

Things have been changing with the more and more frequent introduction, in motorvehicles, of the so-called "air bag" safety devices, which are usually positioned into a housing associated to the vehicle steering wheel.

As known, the central portion of the front wall of said housing - usually consisting of reinforced plastic material - is meant to break and open up with a violent blow at the moment in which the air bag device starts to operate: for this purpose, an undercut facilitating breakage is provided on three sides of a portion of said wall, which portion thus gets lifted - separating from said three sides and remaining anchored with its fourth side to the housing - to allow the outlet of the air bag.

Upon breaking, said wall portion and the portions connected thereto or any elements applied thereon - as for example the badge-plate usually positioned at the centre of the steering wheel - are subjected to very high stresses, mainly determined by the strong accelerations developing in opposite senses. Such stresses may then easily lead the badge-plate to break off from the wall portion just opened up and, though light and of small dimensions, said badge-plate could turn into a dangerous bullet.

To avoid risks of this kind, the use of badge-plates at the centre of steering wheels equipped with air bag devices is now-a-days allowed only if such plates are applied with a system tested so as to guarantee - when the air bag device starts to operate - that the badge-plate remains anchored to the wall housing the device, and to positively exclude its breaking off from said wall.

The problem has been faced and efficiently solved by the Applicant in the FR-9604121, which supplies a unit consisting of a badge-plate and a counterplate, wherein the badge-plate is formed by coining from a metal sheet, in one piece with a central projecting extruded pin having a conical cavity at its end, and wherein the counterplate comprises a central hole in correspondence of said pin and is steadily associated to the badge-plate - after having interposed between them the wall housing the air bag device - by riveting with a caulking the end of said pin of the badge-plate onto the edge of said hole of the counterplate.

The present invention now supplies a series of particularly innovative and advantageous embodiments of the solution described heretofore, which provide a far more practical, economic and versatile system to apply the emblem onto the above unit and, in particular, onto the badge-plate.

According to the invention, said unit is characterized in that the badge-plate forming part thereof consists of a blank metallic base body, onto which is steadily applied a covering shell bearing the emblem.

The invention is now described in further detail, with reference to the accompanying drawings, which illustrate the various currently preferred embodiments thereof, and in which:
Fig. 1 is a top view of a first embodiment of the badge-plate forming part of the unit according to the invention;
Fig. 2 is a side view of the same badge-plate shown in fig. 1;
Figs. 3 and 4 are axial section views of the same badge-plate, along the lines III-III and IV-IV of figs. 1 and 2 respectively;
Fig. 5 is a diagram illustrating the successive assembly steps of the badge-plate embodiment shown in figs. 1 to 4, with some structural and mounting details on an enlarged scale;
Figs. 6 and 7 are a top view and a side view of a second embodiment of the badge-plate forming part of the unit according to the invention;
Fig. 8 is an axial section view of the same badge-plate, along the lines VIII-VIII of fig. 6;
Figs. 9 and 10 are a top view and a side view of a third embodiment of the badge-plate forming part of the unit according to the invention;
Fig. 11 is an axial section view of the same badge-plate, along the lines XI-XI of fig. 9;
Fig. 12 and 13 are a top view and a side view of a further embodiment of the badge-plate forming part of the unit according to the invention; and
Fig. 14 is an axial section view of the same badge-plate, along the lines XIV-XIV of fig. 12.

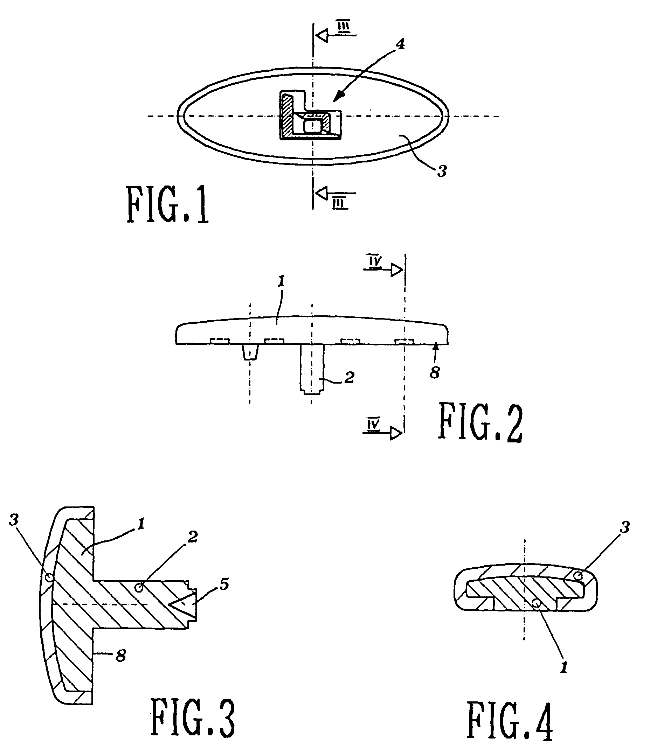

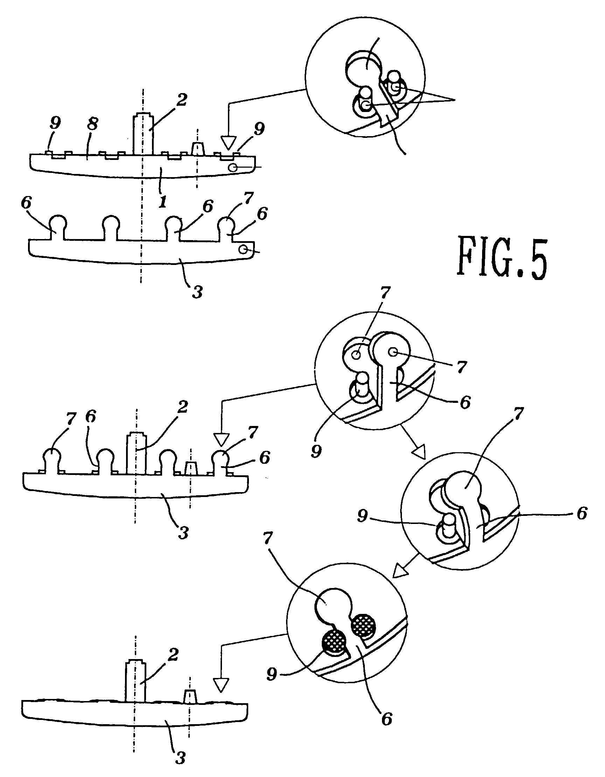

With reference to the embodiment shown in figs. 1 to 5, the badge-plate forming part of the unit according to the invention consists of a blank metallic base body 1, formed by coining from a metal sheet in one piece with a central projecting pin 2, and of a shell 3 also of metal, bearing the emblem 4, which is applied strictly adhering onto the body 1. In known manner, the pin 2 is extruded with a conical cavity 5 at its end. The shell 3 - preferably of aluminum, stainless steel, brass or titanium - is formed with a plurality of peripheral tabs 6 which, on mounting of said shell, are bent against the rear surface 8 of the body 1, as clearly indicated in fig. 5. Preferably - as shown in fig. 5 - the tabs 6 have end swells 7, which are apt to improve even further the anchorage of the shell 3 onto the body 1, this latter being provided with projections 9 to be riveted onto said tabs 6 (see fig. 5).

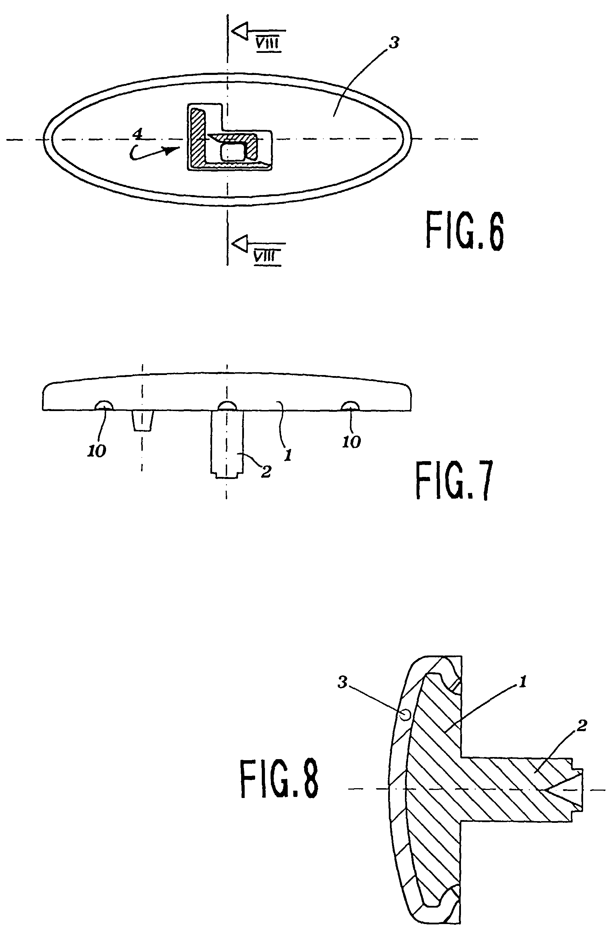

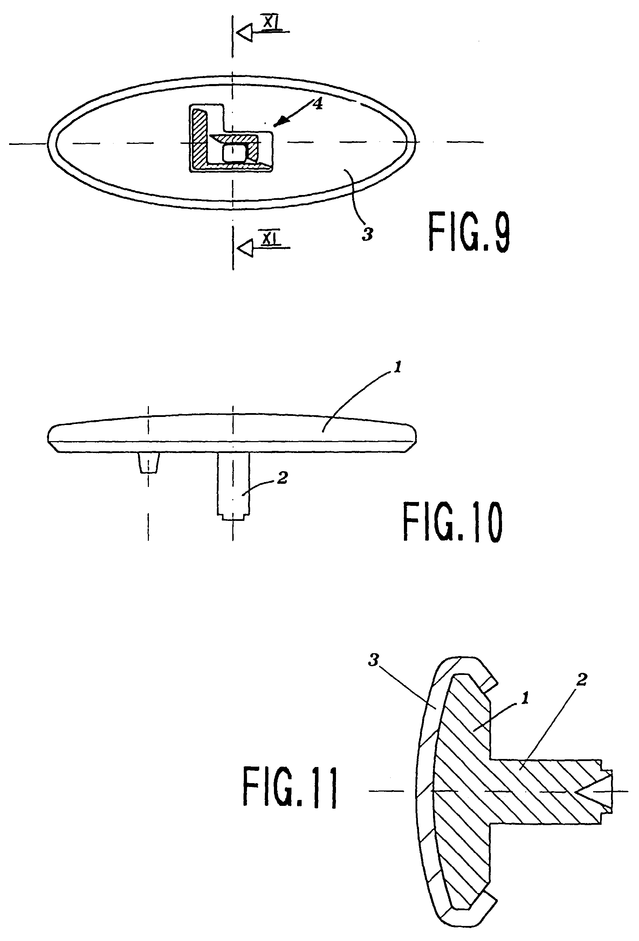

In the embodiment shown in figs. 6 to 8, the badge-plate forming part of the unit according to the invention equally consists of a blank metallic base body 1, formed by coining from a metal sheet in one piece with a central projecting extruded pin 2, and of a metallic shell 3 bearing the emblem 4, which is applied strictly adhering onto the body 1. In this case, however, the two elements 1 and 3 are fixed together by peripheral cold punchings 10, and the anchorage turns out to be perfect by providing the periphery of said two elements with a suitable undercut, as illustrated in fig. 8.

In the embodiment shown in figs. 9 to 11, the badge-plate forming part of the unit according to the invention again consists of a blank metallic base body 1, formed by coining from a metal sheet in one piece with a central projecting extruded pin 2, and of a metallic shell 3 bearing the emblem 4, which is applied strictly adhering onto the body 1. In this case, the fixing between the two elements 1 and 3 is more simply obtained by mechanical beading of the shell periphery onto the lower tapered edge 11 of the body 1, always with a perfectly reliable mutual anchorage.

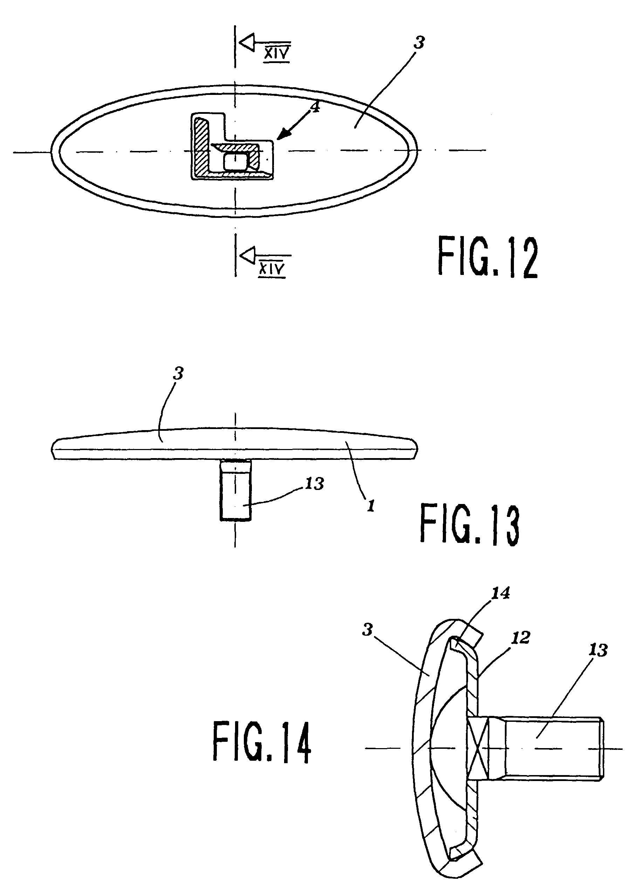

Finally, in the embodiment of figs. 12 to 14, the badge-plate forming part of the unit according to the invention comprises a blank metallic base body 12, shaped as a pan and formed by drawing from a metal sheet. A projecting pin 13 is applied, by any suitable mechanical means, onto the outer central portion of said body 12. In this case, as well as a metallic shell 3 - applied strictly adhering onto the body 12 and fixed thereto by mechanical beading of its periphery onto the bent edge 14 of said drawn body 12 - it is possible to associate to the blank metallic body 12 a cap 3 of a different material - for example leather, wood or cork, fabric, rubber or plastic material - by fixing the edge of said cap onto the bent edge 14 of the body 12 by a suitable adhesive. If the element 3 is a metallic shell, it can be of aluminum, stainless steel, brass or titanium, as in the previous cases.

With the solution according to the present invention, which forms in two distinct, but strictly adhering parts, the badge-plate bearing the emblem - forming part of the badge-plate and counterplate unit according to the invention - the production of this important car accessory turns out to be far more practical, economic and versatile. It is sufficient to consider that, to a single type of blank metallic base body there can be associated a great number of covering shells or caps, made of the most different materials, of more or less high quality, and bearing the most different emblems. Furthermore, as already pointed out, the badge-plate formed in two parts - according to the present invention - is just as safe and reliable as the badge-plates formed in a single piece.

It is anyhow understood that the invention is not limited to the embodiments described heretofore, but other variants can be introduced, without thereby departing from its scope.

## Claims

1. Badge-plate and counterplate unit to safely apply emblems and the like on the front wall of the housing for air bag devices, in cars and other motorvehicles, and particularly onto the portion of said wall opening up, at the centre of the steering wheel, when the air bag device starts to operate, said unit consisting of a badge-plate, formed by coining from a metal sheet in one piece with a central projecting extruded pin having a conical cavity at its end, and of a counterplate comprising a central hole in correspondence of said pin, the counterplate being steadily associated to the badge-plate - after having interposed between them the wall housing the air bag device - by riveting with a caulking the end of said pin of the badge-plate onto the edge of said hole of the counterplate, characterized in that, the badge-plate forming part of said unit consists of a blank metallic base body (1; 12) onto which is steadily applied a covering shell (3) bearing the emblem (4).

2. Unit as in claim 1), wherein said shell (3) is applied onto the blank metallic base body (1; 12) strictly adhering thereto.

3. Unit as in claim 1), wherein said shell (3) is formed with a plurality of peripheral tabs (6) and is fixed strictly adhering onto a blank metallic base body (1) - formed by coining from a metal sheet in one piece with a central projecting extruded pin (2) having a conical cavity (5) at its end - by bending said tabs (6) against the rear peripheral surface (8) of said body (1) from which projects said central pin (2).

4. Unit as in claim 1), wherein said shell (3) is fixed, by peripheral cold punchings (10), strictly adhering onto the periphery of a blank metallic base body (1), formed by coining from a metal sheet in one piece with a central projecting extruded pin (2).

5. Unit as in claim 1), wherein said shell (3) is fixed, by mechanical beading of its periphery, strictly adhering onto the lower tapered edge (11) of a blank metallic base body (1), formed by coining from a metal sheet in one piece with a central projecting pin (2).

6. Unit as in claim 1), wherein said shell (3) is fixed, by mechanical beading of its periphery, strictly adhering onto the bent edge (14) of a pan-shaped blank base body (12), formed by drawing from a metal sheet and having a projecting pin (13) applied by mechanical means onto its outer central portion.

7. Unit as in claims 1) to 6), wherein said shell (3) bearing the emblem (4) is of metallic material.

8. Unit as in claim 1), wherein said shell (3) bearing the emblem (4) is in the form of a cap of non-metallic material applied, strictly adhering, with its edge fixed by an adhesive onto the bent edge (14) of a pan-shaped blank base body (12), formed by drawing from a metal sheet and having a projecting pin (13) applied by mechanical means onto its outer central portion.

9. Unit as in claim 8), wherein said cap (3) is of leather.

10. Unit as in claim 8), wherein said cap (3) is of wood or cork.

11. Unit as in claim 8), wherein said cap (3) is of fabric.

12. Unit as in claim 8), wherein said cap (3) is of rubber or of synthetic plastic material.
